(19) **Europäisches Patentamt**

**European Patent Office**

**Office européen des brevets**

(11) **EP 1 030 796 B1**

(12) **EUROPÄISCHE PATENTSCHRIFT**

(45) Veröffentlichungstag und Bekanntmachung des Hinweises auf die Patenterteilung:
**17.05.2006 Patentblatt 2006/20**

(21) Anmeldenummer: **99936287.4**

(22) Anmeldetag: **20.05.1999**

(51) Int Cl.:
**B60T 8/00** (2006.01)

(86) Internationale Anmeldenummer:
**PCT/DE1999/001508**

(87) Internationale Veröffentlichungsnummer:
**WO 1999/067113 (29.12.1999 Gazette 1999/52)**

(54) **VERFAHREN UND VORRICHTUNG ZUR STABILISIERUNG EINES FAHRZEUGS ANHAND EINER ERMITTELTEN TORSIONSGRÖSSE**

PROCESS AND DEVICE FOR STABILISING A VEHICLE ON THE BASIS OF A DETERMINED TORSIONAL VALUE

PROCEDE ET DISPOSITIF POUR STABILISER UN VEHICULE SUR LA BASE D'UNE GRANDEUR DE TORSION DETERMINEE

(84) Benannte Vertragsstaaten:
**DE FR GB SE**

(30) Priorität: **23.06.1998 DE 19827881**

(43) Veröffentlichungstag der Anmeldung:
**30.08.2000 Patentblatt 2000/35**

(73) Patentinhaber: **ROBERT BOSCH GMBH**
**70442 Stuttgart (DE)**

(72) Erfinder:
• **SCHRAMM, Herbert**
**D-71229 Leonberg (DE)**
• **FAYE, Ian**
**D-70192 Stuttgart (DE)**

(56) Entgegenhaltungen:
**EP-A- 0 758 601**    **EP-A- 0 798 615**
**DE-C- 19 602 879**

## Beschreibung

Stand der Technik

Die Erfindung betrifft ein Verfahren und eine Vorrichtung zur Stabilisierung eines Fahrzeuges. Solche Verfahren und Vorrichtungen sind aus dem Stand der Technik in vielerlei Modifikationen bekannt.

Aus der DE 44 16 991 A1 ist ein Verfahren bzw. eine Einrichtung zum Warnen der Fahrer von Lastkraftwagen vor Kippgefahr bei Kurvenfahrten bekannt. Hierzu wird vor dem Einfahren des Fahrzeuges in eine Kurve, auf einem möglichst geraden Streckenabschnitt vor der Kurve, der Fahrzeugtyp und die für Kippgefahr relevanten Zustandsdaten, wie Fahrzeuggewicht und Fahrzeuggeschwindigkeit erfaßt. In Abhängigkeit vom Fahrzeugschwerpunkt und dem Kurvenradius wird das Kipprisiko bzw. die für letzeres maßgebliche Grenzgeschwindigkeit ermittelt. Es wird ein zur Geschwindigkeitsreduzierung aufforderndes Signal ausgelöst, wenn die aktuelle Fahrgeschwindigkeit Kipprisiko begründet oder ein vorbestimmter Sicherheitsabstand zur Kippgefahr unterschritten wird. Hierzu ist ein vorbestimmter Sicherheitsabstand der zulässigen Fahrgeschwindigkeit gegenüber der an der Grenze der Kippgefahr liegenden Fahrgeschwindigkeit vorgegeben.

Nachteilig an dem in der DE 44 16 991 A1 beschriebenen Gegenstand ist, daß bei Kippgefahr lediglich ein den Fahrer warnendes Signal erzeugt wird, anstatt selbsttätig bzw. fahrerunabhängig Maßnahmen zur Reduzierung der Fahrzeuggeschwindigkeit und somit zur Abwendung des Kipprisikos durchzuführen. Dadurch kann unter Umständen nicht rechtzeitig auf ein drohendes Kipprisiko reagiert werden. Desweiteren bleiben bei der Ermittlung des Kipprisikos sowohl torsionsbedingte als auch ladungsverschiebungsbedingte Einflüsse, die durch auf das Fahrzeug wirkende Kräfte entstehen, unberücksichtigt.

Aus der DE 32 22 149 C2 ist eine Vorrichtung für die Vermeidung des Seitwärtskippens eines Fahrzeugs bekannt. Hierzu wird in Abhängigkeit der Spur und der Schwerpunkthöhe eine statische Stabilität ermittelt. Aus dieser werden durch Multiplikation mit zwei unterschiedlichen Sicherheitsfaktoren zwei zulässige Grenzen ermittelt. Ausgehend von der Fahrgeschwindigkeit des Fahrzeuges, des Kurvenradiuses und der Gravitationsbeschleunigung wird eine dynamische Instabilität ermittelt. Diese dynamische Instabilität wird in zwei Vergleichen mit jeweils einer der beiden zulässigen Grenzen verglichen. Ist die dynamische Instabilität größer als die erste zulässige Grenze, so wird die Getriebekupplung gelöst. Ist die dynamische Instabilität größer als die zweite zulässige Grenze, so werden die Bremsen des Fahrzeuges betätigt.

Auch bei der DE 32 22 149 C2 bleiben sowohl torsionsbedingte als auch ladungsverschiebungsbedingte Einflüsse, die durch auf das Fahrzeug wirkende Kräfte entstehen, unberücksichtigt.

Eine Aufgabe der vorliegenden Erfindung besteht darin, bestehende Vorrichtungen bzw. Verfahren zur Stabilisierung eines Fahrzeuges dahingehend zu verbessern, daß bei der Stabilisierung des Fahrzeuges zum einen das Torsionsverhalten des Fahrzeuges und zum anderen die Verschiebung der Ladung aufgrund von auf das Fahrzeug wirkenden Kräften berücksichtigt wird. Aus diesem Grund wird bei der Ermittlung eines Grenzwertes für die Fahrzeuggeschwindigkeit eine Torsionsgröße und/oder eine Ladungsverschiebungsgröße berücksichtigt.

Diese Aufgabe wird durch die Merkmale des Anspruchs 1 und durch die des Anspruchs 10 gelöst.

Vorteile der Erfindung

Bei dem erfindungsgemäßen Verfahren handelt es sich um ein Verfahren zur Stabilisierung eines Fahrzeuges. Insbesondere soll ein Umkippen des Fahrzeuges um ein in Längsrichtung des Fahrzeuges orientierte Fahrzeugachse und/oder ein Rutschen des Fahrzeuges in Querrichtung vermieden werden. Zur Veranschaulichung sei erwähnt: Wirkt auf ein Fahrzeug eine hohe Querbeschleunigung bei einem hohen Reibwert, so besteht die Gefahr des Umkippens. Liegt dagegen ein niedriger Reibwert vor, so existiert die Gefahr des Rutschens in Querrichtung.

An dieser Stelle sei bemerkt, wie die Formulierung "eine in Längsrichtung des Fahrzeuges orientierte Fahrzeugachse" zu verstehen ist: Zum einen kann es sich bei der Fahrzeugachse, um die eine Kipptendenz des Fahrzeuges auftritt, um die eigentliche Fahrzeuglängsachse handeln. Zum anderen kann es sich um eine Fahrzeugachse handeln, die um einen gewissen Winkel gegenüber der eigentlichen Fahrzeuglängsachse verdreht ist. Dabei ist es unerheblich, ob die verdrehte Fahrzeugachse durch den Schwerpunkt des Fahrzeuges geht oder nicht. Der Fall der verdrehten Fahrzeugachse soll auch solch eine Orientierung der Fahrzeugachse zulassen, bei der die Fahrzeugachse entweder einer Diagonalachse des Fahrzeuges oder einer zu dieser parallelen Achse entspricht. Ferner sei bemerkt, daß die Formulierung "Rutschen des Fahrzeuges in Querrichtung" auch das Schleudern des Fahrzeuges umfassen soll.

Bei dem erfindungsgemäßen Verfahren wird eine Geschwindigkeitsgröße, die die Fahrzeuggeschwindigkeit beschreibt, und wenigstens ein Grenzwert für die Fahrzeuggeschwindigkeit ermittelt. Da bei dem erfindungsgemäßen Verfahren zum einen das Torsionsverhalten des Fahrzeuges und zum anderen die Verschiebung der Ladung aufgrund von auf das Fahrzeug wirkenden Kräften berücksichtigt werden soll, wird der wenigstens eine Grenzwert erfindungsgemäß wenigstens in Abhängigkeit des Wertes einer Torsionsgröße und/oder des Wertes einer Ladungsverschiebungsgröße ermittelt. In Abhängigkeit der Geschwindigkeitsgröße und des Grenzwertes wird ein Vergleich durchgeführt, und in Abhängigkeit dieses Vergleichs werden Eingriffe zur Stabilisierung des Fahrzeuges durchgeführt. An dieser Stelle sei folgendes bemerkt: Erfindungsgemäß soll wenigstens ein Grenzwert ermittelt werden. Zur Verdeutlichung, daß für den Vergleich ein Grenzwert aus mehreren ausgewählt werden kann, wird in der Beschreibung der Grenzwert im Rahmen der Vergleichsdurchführung als Vergleichsgröße bezeichnet.

Die Torsionsgröße charakterisiert, wie sich das Fahrzeug in Reaktion auf eine auf das Fahrzeug einwirkende Kraft, insbesondere in Reaktion auf eine Querkraft, um eine in Längsrichtung des Fahrzeuges orientierte Fahrzeugachse verhält, insbesondere in welchem Maße das Fahrzeug um diese Fahrzeugachse aufgrund einer auf das Fahrzeug einwirkenden Kraft verdreht und/oder verwunden und/oder ausgelenkt wird. Beispielsweise soll durch die Torsionsgröße auch eine Wankbewegung des Fahrzeuges erfaßt sein. Da die Torsionsgröße das Verhalten des Fahrzeuges um eine in Längsrichtung des Fahrzeuges orientierte Fahrzeugachse beschreibt, beschreibt sie somit auch die Verlagerung des Schwerpunktes des Fahrzeuges um diese Achse. Die Verlagerung des Schwerpunktes beeinflußt das Verhalten des Fahrzeuges mit Blick auf eine eventuell vorliegende Kippgefahr bzw. Rutschgefahr. Somit kann bei Kenntnis der Torsionsgröße des Fahrzeuges eine genauere und somit bessere Stabilisierung des Fahrzeuges durchgeführt werden. Zu diesem Zweck wird der wenigstens eine Grenzwert für die Fahrzeuggeschwindigkeit in Abhängigkeit des Wertes der Torsionsgröße ermittelt. Da das Torsionsverhalten des Fahrzeuges in starkem Maße von der Fahrzeugmasse abhängt, wird die Torsionsgröße vorteilhafterweise wenigstens in Abhängigkeit einer Massengröße, die die Masse des Fahrzeuges beschreibt, ermittelt.

Die Ladungsverschiebungsgröße, die insbesondere für Fahrzeuge mit beweglicher, vorzugsweise flüssiger, Ladung, ermittelt wird, charakterisiert, wie sich die Ladung des Fahrzeuges in Reaktion auf eine auf das Fahrzeug einwirkende Kraft, insbesondere in Reaktion auf eine Querkraft, verhält, insbesondere in welchem Maße die Ladung des Fahrzeuges aufgrund einer auf das Fahrzeug einwirkenden Kraft verschoben und/oder ausgelenkt wird. Da das Kipprisiko bzw. das Rutschrisiko des Fahrzeuges durch die Verschiebung der mit dem Fahrzeug transportierten Ladung insbesondere bei Kurvenfahrt beeinflußt wird, wird die Ladungsverschiebungsgröße insbesondere für Fahrzeuge mit beweglicher, vorzugsweise flüssiger Ladung, ermittelt. Um die Ladungsverschiebung zu berücksichtigen, wird der wenigstens eine Grenzwerte für die Fahrzeuggeschwindigkeit wenigstens in Abhängigkeit des Wertes dieser Ladungsverschiebungsgröße ermittelt. Die Ladungsverschiebungsgröße wird wenigstens in Abhängigkeit einer Massengröße, die die Masse des Fahrzeuges beschreibt, ermittelt. Beispielsweise wird bei beweglicher, vorzugsweise flüssiger Ladung, in Abhängigkeit dieser Massengröße das Volumen der Ladung ermittelt, und die Ladungsverschiebungsgröße in Abhängigkeit dieses Volumens ermittelt. Ergänzend wird die Ladungsverschiebungsgröße in Abhängigkeit einer Größe, die die am Fahrzeug zur Aufnahme der Ladung vorhandene Vorrichtung charakterisiert, ermittelt. Insbesondere hängt der Wert der Größe, die die am Fahrzeug zur Aufnahme der Ladung vorhandene Vorrichtung charakterisiert, wenigstens von der Form dieser Vorrichtung ab. Bei Fahrzeugen, die eine flüssige Ladung transportieren kann vorteilhafterweise während des Belade- bzw. Entladevorganges der Vorrichtung zur Aufnahme der Ladung das Volumen der flüssigen Ladung direkt ermittelt werden. In Abhängigkeit dieses Volumens wird dann die Ladungsverschiebungsgröße ermittelt.

Vorteilhafterweise wird eine Massengröße ermittelt, die die Masse des Fahrzeuges beschreibt. Diese Massengröße wird wenigstens in Abhängigkeit einer Größe, die die auf das Fahrzeug wirkende Antriebskraft beschreibt und in Abhängigkeit von die Raddrehzahlen beschreibenden Größen ermittelt. Der wenigstens eine Grenzwert für die Fahrzeuggeschwindigkeit wird in Abhängigkeit dieser Massengröße ermittelt. Da die auf das Fahrzeug einwirkenden Kräfte bei einer Kurvenfahrt, beispielsweise die Zentrifugalkraft, von der Fahrzeugmasse abhängen, geht die Massengröße direkt in Ermittlung des Grenzwertes ein.

Dem erfindungsgemäßen Verfahren liegt ein Geschwindigkeitsvergleich zugrunde, der in Abhängigkeit der Geschwindigkeitsgröße und des wenigstens einen Grenzwertes durchgeführt wird. Da es sich um wenigstens einen Grenzwert handeln soll, muß zur Durchführung des Vergleiches ein Grenzwert ausgewählt werden, dieser eine ausgewählte Grenzwert wird als Vergleichsgröße bezeichnet. In Abhängigkeit dieses Vergleiches werden Eingriffe zur Stabilisierung des Fahrzeuges durchgeführt. Für den Fall, bei dem die aktuelle Geschwindigkeitsgröße größer als die Vergleichsgröße ist, wird die Fahrzeuggeschwindigkeit wenigstens durch Retardereingriffe und/oder durch Motoreingriffe und/oder durch Bremseneingriffe an wenigstens einem Rad so weit reduziert, daß die sich aufgrund der Eingriffe ergebende Geschwindigkeitsgröße kleiner als die oder gleich der Vergleichsgröße ist. Vorzugsweise werden hierzu die Eingriffe in Abhängigkeit des Abstandes der Geschwindigkeitsgröße von der Vergleichsgröße durchgeführt.

Vorteilhafterweise werden zwei Grenzwerte ermittelt, von denen einer als Vergleichsgröße ausgewählt wird. Ein erster Grenzwert entspricht einer die Kippgefahr des Fahrzeuges beschreibenden Größe. Ein zweiter Grenzwert entspricht einer die Rutschgefahr des Fahrzeuges, insbesondere die Rutschgefahr in Querrichtung, beschreibenden Größe. Folglich wird mit Hilfe des ersten Grenzwertes die Kippgefahr des Fahrzeuges und mit Hilfe des zweiten die Rutschgefahr des Fahrzeuges bzw. die Schleudergefahr des Fahrzeuges erfaßt und/oder beobachtet.

Die Ermittlung zweier Grenzwerte hat den Vorteil, daß dadurch zwei verschiedene kritische Situationen erfaßt und/oder beobachtet werden. Einer der beiden Grenzwerte wird als Vergleichsgröße zur Durchführung des Vergleiches ausgewählt. Vorzugsweise handelt es sich hierbei um den Grenzwert, der den kleineren Wert aufweist. Dadurch daß der kleinere der beiden Grenzwerte als Vergleichsgröße ausgewählt wird, wird sichergestellt, daß die Stabilisierung des Fahrzeuges für die Situation durchgeführt wird, bei der die größere Gefahr für das Fahrzeug ausgeht.

Da der zweite Grenzwert einer die Rutschgefahr des Fahrzeuges beschreibenden Größe entspricht, ist diesbezüglich die Ermittlung wenigstens einer Reibungsgröße, die die in der jeweiligen Fahrsituation vorliegenden Reibverhältnisse zwischen Reifen und Fahrbahn beschreibt, erforderlich. Es hat sich von Vorteil erwiesen, zwei Reibungsgrößen zu ermitteln. Eine erste beschreibt den momentan vorliegenden Reibwert, und eine zweite den Unterschied des Reibwertes auf der linken bzw. der rechten Fahrzeugseite. Dadurch werden unterschiedliche Reibwerte aufgrund einer entsprechend unterschiedlichen Fahrbahnbeschaffenheit erfaßt.

Der Abstand des Fahrzeugschwerpunktes von der Fahrbahn beeinflußt das Fahrzeugverhalten mit Blick auf ein Kipprisiko bzw. auf ein Rutschrisiko des Fahrzeuges in entscheidendem Maße. So ist beispielsweise die Kippgefahr eines Fahrzeuges bei Kurvenfahrt um so größer, je höher der Fahrzeugschwerpunkt ist. Aus diesem Grund wird beim erfindungsgemäßen Verfahren eine erste Höhengröße ermittelt, die diesen Abstand beschreibt. Diese erste Höhengröße wird wenigstens in Abhängigkeit von Raddrehzahlen beschreibenden Größen ermittelt. Wenigstens ein Grenzwert für die Fahrzeuggeschwindigkeit wird in Abhängigkeit dieser ersten Höhengröße ermittelt.

Ebenso beeinflußt der Abstand einer in Längsrichtung des Fahrzeuges orientierten Fahrzeugachse, um die das Fahrzeug, in Reaktion auf eine auf das Fahrzeug einwirkende Kraft, insbesondere in Reaktion auf eine Querkraft, verdreht und/oder verwunden und/oder ausgelenkt wird, von der Fahrbahn, das Kipprisiko bzw. das Rutschrisiko des Fahrzeuges. So ist beispielsweise die Kippgefahr des Fahrzeuges um so größer, je höher diese Achse im Fahrzeug liegt. Um diesen Einfluß zu berücksichtigen, wird eine zweite Höhengröße ermittelt, die den Abstand der vorstehend beschriebenen Achse von der Fahrbahn beschreibt. Diese zweite Höhengröße wird wenigstens in Abhängigkeit der Massengröße, die die Masse des Fahrzeuges beschreibt, ermittelt. Wenigstens ein Grenzwert für die Fahrzeuggeschwindigkeit wird in Abhängigkeit dieser zweiten Höhengröße ermittelt.

Neben den bisher beschriebenen Größen ist auch eine Bahngröße, die den Radius der momentan vom Fahrzeug gefahrenen Bahn, insbesondere der momentan vom Fahrzeug durchfahrenen Kurve, beschreibt, bzgl. des Kipprisikos bzw. des Rutschrisikos von Bedeutung. Je kleiner der Kurvenradius bei gleichbleibender Fahrzeuggeschwindigkeit ist, desto größer sind die auf das Fahrzeug wirkenden Querkräfte, desto größer ist die Kippgefahr bzw. die Rutschgefahr. Aus diesem Grund werden die Grenzwerte für die Fahrzeuggeschwindigkeit in Abhängigkeit dieser Bahngröße ermittelt. Die Bahngröße wiederum wird in Abhängigkeit der Geschwindigkeitsgröße und einer Lenkwinkelgröße, die den Lenkwinkel des Fahrzeuges, beschreibt, ermittelt.

Das erfindungsgemäße Verfahren hat den Vorteil, daß ausgehend von der Sensorik, die in einem System zur Regelung einer die Fahrdynamik des Fahrzeuges beschreibenden Größe vorhanden ist, keine zusätzliche Sensorik erforderlich ist. Solch ein System zur Regelung einer die Fahrdynamik des Fahrzeuges beschreibenden Größe ist für Personenkraftwagen beispielsweise in der in der Automobiltechnischen Zeitschrift (ATZ) 96, 1994, Heft 11, auf den Seiten 674 bis 689 erschienen Veröffentlichung "FDR - Die Fahrdynamikregelung von Bosch" oder für Nutzfahrzeuge in dem SAE-Paper 973284 "Vehicle dynamics control for commercial vehicles" beschrieben.

Die Auswertung des Lenkwinkels als Eingangsgröße beim erfindungsgemäßen Verfahren hat folgende Vorteile: Durch den vom Fahrer vorgegebenen Lenkwinkel wird eine Kurvenfahrt eingeleitet. Folglich kann durch Auswertung des Lenkwinkels schon im Vorfeld, d.h. bevor die eigentliche Gefahrensituation auftritt, festgestellt werden, ob für das Fahrzeug ein Kipprisiko oder ein Rutschrisiko besteht. D.h., sollte ein solches Risiko vorliegen, so können stabilisierende Eingriffe sehr schnell und somit rechtzeitig erfolgen. Mit anderen Worten, die Auswertung des Lenkwinkels entspricht der Realisierung einer sogenannten Preview-Funktion. Ferner werden stabilisierende Eingriffe lediglich bei Kurvenfahrt durchgeführt, d.h. bei einer Geradeausfahrt werden als störend empfundene stabilisierende Eingriffe von vornherein unterbunden.

Weitere Vorteile sowie vorteilhafte Ausgestaltungen können den Unteransprüchen, wobei auch beliebige Kombinationen der Unteransprüche denkbar sind, der Zeichnung sowie der Beschreibung des Ausführungsbeispiels entnommen werden.

Zeichnung

Die Zeichnung besteht aus den Figuren 1 bis 5. Die Figuren 1a und 1b zeigen ein einteiliges bzw. ein zweiteiliges Fahrzeug, bei denen das erfindungsgemäße Verfahren eingesetzt wird. Die Figuren 2a bis 2d stellen für unterschiedliche Fahrzeugtypen, Nutzfahrzeuge zum Transport von flüssiger bzw. nicht flüssiger Ladung sowie Personenkraftwagen, die dem erfindungsgemäßen Verfahren bzw. der erfindungsgemäßen Vorrichtung zugrundeliegende Problematik dar. In den Figuren 3 bzw. 4 wird in unterschiedlichem Detailiertheitsgrad in einer Übersichtsanordnung die erfindungsgemäße Vorrichtung zur Durchführung des erfindungsgemäßen Verfahrens gezeigt. Figur 5 zeigt mit Hilfe eines Ablaufdiagrammes eine Ausführungsform zur Durchführung des erfindungsgemäßen Verfahrens. Es sei darauf hingewiesen, daß Blöcke mit derselben Bezeichnung in unterschiedlichen Figuren dieselbe Funktion haben.

Ausführungsbeispiel

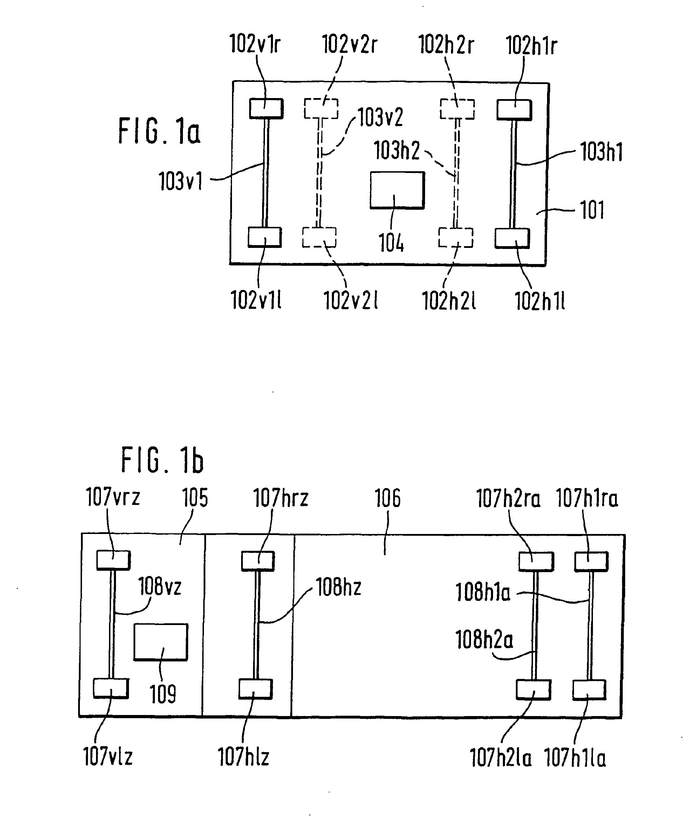

Zunächst soll auf die Figuren 1a und 1b eingegangen werden, die ein einteiliges bzw. ein zweiteiliges Straßenfahrzeug darstellen, bei denen das erfindungsgemäße Verfahren zum Einsatz kommen kann.

In Figur 1a ist ein einteiliges Fahrzeug 101 dargestellt. Bei diesem Fahrzeug kann es sich sowohl um einen Personenkraftwagen als auch um einen Nutzkraftwagen handeln. Dieses Fahrzeug soll wenigstens zwei Radachsen aufweisen, was durch die teilweise gestrichelte Darstellung angedeutet ist. Die Radachsen des Fahrzeuges 101 sind mit 103ix bezeichnet. Wobei an dieser Stelle für die Radachsen, anstelle der in Figur 1a verwendeten ausführlichen Schreibweise, eine abkürzende Schreibweise verwendet wird, bei der der Index i angibt, ob es sich um eine Vorderachse (v) oder um eine Hinterachse (h) handelt. Durch den Index x wird bei Fahrzeugen mit mehr als zwei Achsen angegeben, um welche der Vorder- bzw. Hinterachsen es sich handelt. Dabei gilt folgende Zuordnung: Der Vorderachse bzw. der Hinterachse, die der Fahrzeugberandung am nächsten ist, ist jeweils der Index x mit dem kleinsten Wert zugeordnet ist. Je weiter die jeweilige Radachse von der Fahrzeugberandung entfernt ist, desto größer ist der Wert des zugehörigen Index x. Den Radachsen 103ix sind die Räder 102ixj zugeordnet. Mit dem Index j wird angezeigt, ob sich das Rad auf der rechten (r) bzw. auf der linken (1) Fahrzeugseite befindet. Ferner enthält das Fahrzeug 101 ein Steuergerät 104, in welchem die erfindungsgemäße Vorrichtung zur Durchführung des erfindungsgemäßen Verfahrens implementiert ist.

In Figur 1b ist eine Fahrzeugkombination, bestehend aus einer Zugmaschine 105 und einem Auflieger 106 dargestellt. Die gewählte Darstellung soll keine Einschränkung darstellen, denkbar ist auch eine Fahrzeugkombination, die aus einer Zugmaschine und einem Deichselanhänger besteht. Die Zugmaschine 105 soll die Radachsen 108iz aufweisen. Den Radachsen 108iz sind Räder 107ijz zugeordnet. Der Index z gibt an, daß es sich um Radachsen bzw. Räder der Zugmaschine handelt. Ferner weist die Zugmaschine 105 ein Steuergerät 109 auf, in dem das erfindungsgemäße Verfahren abläuft und mit dem sowohl die Zugmaschine 105 als auch der Auflieger 106 stabilisiert wird. Der Auflieger 106 soll zwei Radachsen 108ixa enthalten. Den beiden Radachsen 108ixa sind in entsprechender Weise die Räder 107ixja zugewiesen. Der Index a gibt an, daß es sich um Komponenten des Aufliegers 106 handelt. Die in Figur 1b dargestellte Anzahl von Radachsen für die Zugmaschine 105 bzw. für den Auflieger 106 soll keine Einschränkung darstellen. Das Steuergerät 109 kann anstelle in der Zugmaschine 105 auch im Auflieger 106 angeordnet sein. Ferner ist es denkbar, sowohl das Zugfahrzeug 105 als auch den Auflieger 106 mit jeweils einem Steuergerät auszustatten.

Die in den Figuren 1a und 1b gewählte Kennzeichnung durch die Indizes a, i, j, x sowie z ist für sämtliche Größen bzw. Komponenten, bei denen sie Verwendung findet, entsprechend.

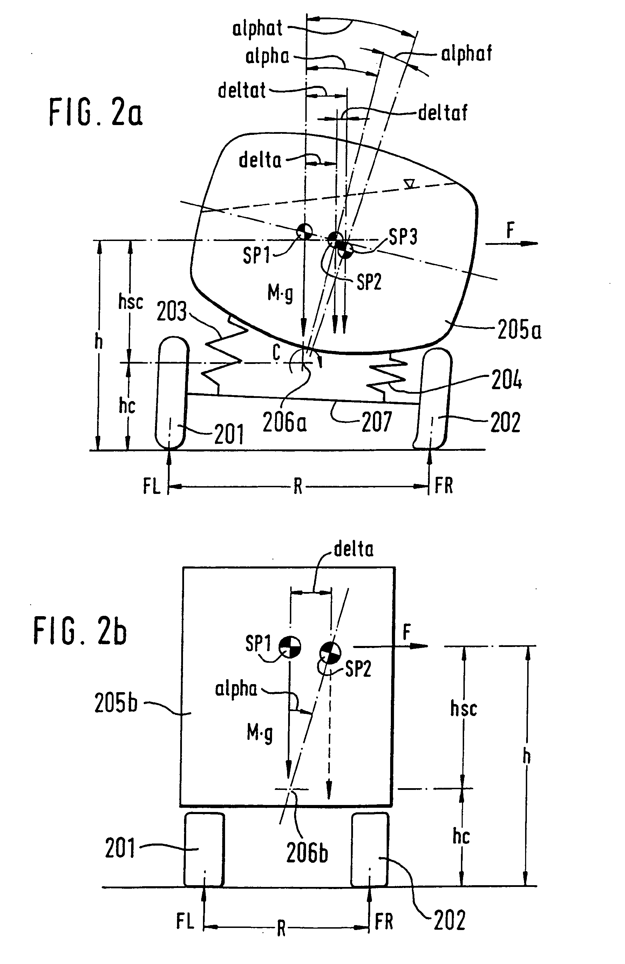

Nachfolgend soll auf die Figuren 2a bis 2d eingegangen werden. Mit Hilfe dieser Figuren soll der physikalische Sachverhalt, der dem erfindungsgemäßen Verfahren bzw. der erfindungsgemäßen Vorrichtung zugrundeliegt, dargestellt bzw. besprochen werden.

Figur 2a zeigt ein Fahrzeug zum Transport beweglicher, insbesondere flüssiger Ladung. Als Beispiel sei hierfür ein Tanklastwagen bzw. ein Tanklastzug genannt. In der Schnittdarstellung sind die Räder 201 bzw. 202 zu sehen, die beispielhaft mit einer Achse 207 in Verbindung stehen. Über Aufhängungsvorrichtungen 203 bzw. 204 ist ein Fahrzeugaufbau 205a, in dem sich die zu befördernde Ladung befindet, mit der Achse 207 verbunden. Das in Figur 2a dargestellte Fahrzeug soll sich in einer nach links gerichteten Kurvenfahrt befinden. Mit R ist die Spur des Fahrzeuges bezeichnet.

Bei dem in Figur 2a dargestellten Fahrzeug ist sowohl der Einfluß der Torsion, der durch die Torsionsgröße C beschrieben wird, als auch der Einfluß der Ladungsverschiebung, der durch die Ladungsverschiebungsgröße K beschrieben wird, dargestellt.

Die Größe h gibt den Abstand des Schwerpunktes des Fahrzeuges von der Fahrbahn an. Die am Fahrzeug im jeweiligen Schwerpunkt angreifende Schwerkraft ist durch die Größe M·g gekennzeichnet. Die Größe hc gibt den Abstand einer in Längsrichtung des Fahrzeuges orientierten Fahrzeugachse 206a, um die das Fahrzeug, in Reaktion auf eine auf das Fahrzeug einwirkende Kraft verdreht und/oder verwunden und/oder ausgelenkt wird, von der Fahrbahn an. Die Größe hsc, die den Abstand zwischen dem Schwerpunkt des Fahrzeuges und der vorstehend beschriebenen Fahrzeugachse 206a angibt, kann beispielsweise aus der Größe h und der Größe hc durch Subtraktion bestimmt werden. Mit C ist die Torsionsgröße bezeichnet, die das Verhalten des Fahrzeuges um die vorstehend beschriebene Fahrzeugachse 206a in Reaktion auf eine auf das Fahrzeug einwirkende Kraft, insbesondere eine Querkraft beschreibt. Diese Kraft ist in Figur 2a als Kraft F eingezeichnet. Es soll sich hierbei um die aufgrund der Kurvenfahrt auftretende Zentrifugalkraft handeln. Auf die Räder des Fahrzeuges wirken die Kräfte FL bzw. FR.

Mit SP1 ist der Schwerpunkt des Fahrzeuges, wie er beispielsweise bei einer Geradeausfahrt vorliegen würde, dargestellt. Mit delta ist die torsionsbedingte vertikale Verschiebung des Schwerpunktes von SP1 nach SP2 dargestellt, die sich aufgrund der Kurvenfahrt ergibt. Dabei wird das Fahrzeug bezogen auf die Achse 206a um den Winkel alpha ausgelenkt. Der torsionsbedingten Verschiebung bzw. Auslenkung ist die ladungsverschiebungsbedingte überlagert. Die ladungsverschiebungsbedingte Verschiebung ist mit deltaf und die zugehörige Auslenkung mit alphaf bezeichnet. Diese bewirkt eine Verschiebung des Schwerpunktes von SP2 nach SP3. Insgesamt ergibt sich somit eine Verschiebung bzw. Auslenkung von deltat bzw. alphat und somit eine Verschiebung des Schwerpunktes von SP1 nach SP3. Außerdem werden durch die torsionsbedingte bzw. ladungsverschiebungsbedingte Verschiebung bzw. Auslenkung die Kräfte FL bzw. FR dahingehend verändert, daß die entsprechenden Kräfte an den kurveninneren Rädern abnehmen und die Kräfte an den kurvenäußeren Rädern zunehmen.

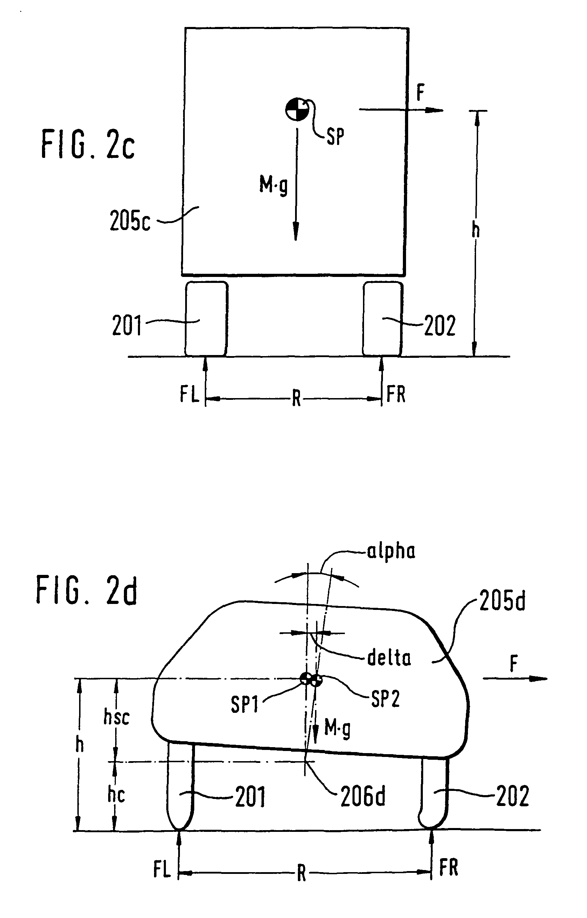

Anhand der Darstellung in Figur 2a sieht man, daß bei Nutzfahrzeugen vor allem wegen der hochliegenden und veränderlichen Schwerpunktlage auf das räumliche Verhalten des Fahrzeuges geachtet werden muß. Kraftfahrzeuge, die flüssiges Ladegut transportieren, sind besonders gefährdet. Neben den torsionsbedingten Einflüssen sind auch die Einflüsse, die sich aufgrund einer Flüssigkeitsverlagerung zur kurvenäußeren Seite des Fahrzeuges hin ergeben, zu beachten. Das vorstehend Aufgeführte gilt in entsprechender Weise auch für Personenkraftwagen. In diesem Zusammenhang sei an dieser Stelle bereits auf die noch zu beschreibende Figur 2d verwiesen.

An dieser Stelle sei bemerkt, daß die vorstehend erwähnte Torsionsgröße C alle auf das Fahrzeug einwirkenden torsionsbedingten Einflüsse umfassen soll, d.h. die Torsionsgröße C beschreibt die Gesamttorsionssteifigkeit des Fahrzeuges, die sich beispielsweise aus den einzelnen Torsionssteifigkeiten für den Rahmen, die Reifen sowie die Aufhängevorrichtungen zusammensetzt.

In Figur 2b ist ein Fahrzeug, insbesondere ein Nutzfahrzeug, dargestellt, welches für gewöhnlich zum Transport nichtbeweglicher Ladung verwendet wird. Auf die Darstellung der Aufhängungsvorrichtungen wurde der Übersichtlichkeit halber verzichtet. Da im dargestellten Fall nicht von einer Ladungsverschiebung auszugehen ist, bzw. diese in vernachlässigbarem Maße auftritt, wird der Schwerpunkt lediglich torsionsbedingt von SP1 nach SP2 verschoben bzw. ausgelenkt. Allerdings tritt aufgrund unterschiedlich starker Beladung des Fahrzeuges eine Veränderung der Schwerpunktlage und somit wenigstens eine Änderung der Größen hsc bzw. h ein.

Entsprechend der Darstellung in Figur 2b ist in Figur 2d der gleiche Sachverhalt für einen Personenkraftwagen dargestellt. Bei einem Personenkraftwagen ist in erster Linie eine torsionsbedingte Verschiebung bzw. Auslenkung des Schwerpunktes zu erwarten. Eine ladungsverschiebungsbedingte dürfte in seltenen Fällen, beispielsweise bei sogenannten Pickup Trucks oder ähnlichen Kleintransportkraftwagen, auftreten.

Figur 2c zeigt ein Fahrzeug, welches weder eine torsionsbedingte noch eine ladungsverschiebungsbedingte Verschiebung bzw. Auslenkung des Schwerpunktes aufweisen soll.

Mit der Darstellung der verschiedenen Fahrzeuge in den Figuren 2a bis 2d soll zum Ausdruck gebracht werden, daß das erfindungsgemäße Verfahren für beliebige Fahrzeuge anwendbar ist. So ist das erfindungsgemäße Verfahren bei Fahrzeugen anwendbar, bei denen es zu einer torsionsbedingten bzw. ladungsverschiebungsbedingten Auslenkung bzw. Verschiebung des Schwerpunktes kommt. Ebenso ist das erfindungsgemäße Verfahren für Fahrzeuge anwendbar, bei denen es lediglich zu einer torsionsbedingten Verschiebung bzw. Auslenkung des Schwerpunktes kommt. Desweiteren ist das erfindungsgemäße Verfahren für Fahrzeuge anwendbar, bei denen weder eine torsionsbedingte noch eine ladungsverschiebungsbedingte Auslenkung bzw. Verschiebung des Schwerpunktes auftritt. Das erfindungsgemäße Verfahren ist beispielsweise auch für Omnibusse einsetzbar.

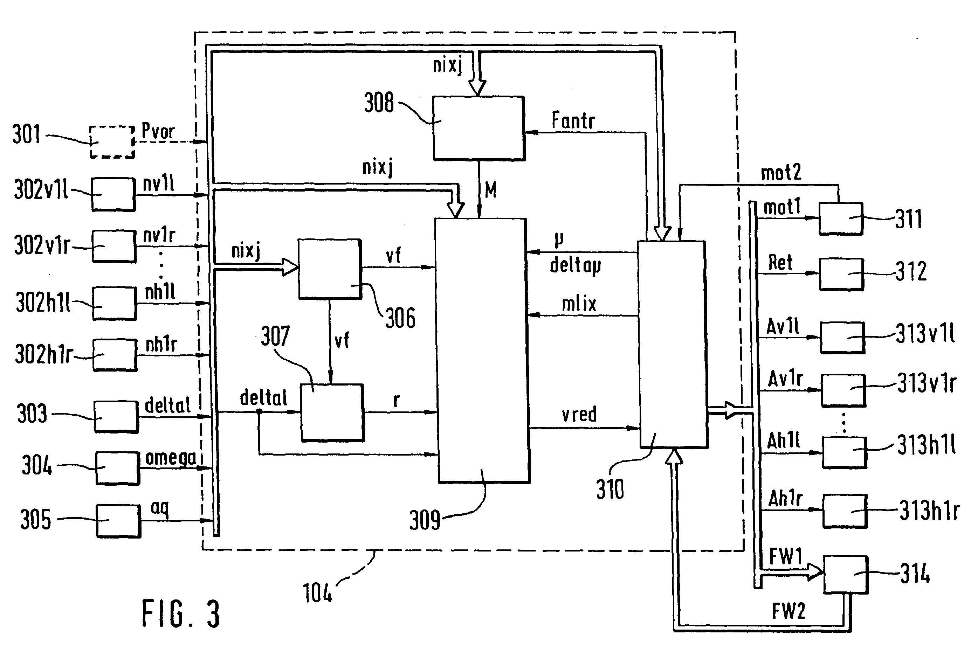

Nachfolgend soll auf Figur 3 eingegangen werden.

Figur 3 liegt ein einteiliges Fahrzeug zugrunde, wie es beispielsweise in Figur 1a dargestellt ist. Aus diesem Grund ist in Figur 3 das Steuergerät 104 enthalten. Diese Darstellung soll allerdings nicht einschränkend wirken, da der Gegenstand der Erfindung in entsprechender Weise auch für ein Fahrzeug, wie es in Figur 1b dargestellt ist, anwendbar ist. Hierzu sind ausgehend von Figur 3 eventuell entsprechende Modifikationen erforderlich.

Es sei angenommen, daß das einteilige Fahrzeug wenigstens zwei Radachsen, eine Vorderachse 103v1 mit den Rädern 102v1r bzw. 102v1l sowie eine Hinterachse 103h1 und den Rädern 102h1r bzw. 102h1l aufweist. Die zu diesen Rädern gehörenden Raddrehzahlsensoren 302i1j sind in Figur 3 dargestellt. Je nach Anzahl der Radachsen des einteiligen Fahrzeuges kommen, wie in Figur 3 angedeutet, weitere Raddrehzahlsensoren 302ixj hinzu. Mit den Raddrehzahlsensoren 302ixj werden Größen nixj ermittelt, die jeweils die Raddrehzahl des entsprechenden Rades 102ixj beschreiben. Die Größen nixj werden Blöcken 306, 308, 309 sowie 310 zugeführt. Die Raddrehzahlsensoren 302ixj sind unabhängig von der Art des Reglers 310 auf jeden Fall vorhanden.

Ferner enthält das Fahrzeug einen Sensor 303, mit dem eine Lenkwinkelgröße deltal, die den Lenkwinkel des Fahrzeuges beschreibt, ermittelt wird. Dieser Sensor 303 ist ebenfalls unabhängig von der Art des Reglers 310 auf jeden Fall vorhanden. Die Lenkwinkelgröße deltal wird einem Block 307, einem Block 309 sowie dem Block 310 zugeführt.

Der Block 310 stellt den im Steuergerät 104 implementierten Regler bzw. Fahrzeugregler dar. Bei diesem Regler 310 handelt es sich in allgemeiner Weise um einen Schlupfregler. Dabei kann dieser Schlupfregler beispielsweise als Bremsschlupfregler und/oder als Antriebsschlupfregler ausgelegt sein. Im vorliegenden Ausführungsbeispiel soll es sich um einen Schlupfregler bzw. Regler handeln, der in seiner Grundfunktion eine die Fahrdynamik des Fahrzeuges beschreibende Größe, beispielsweise eine von der Querbeschleunigung und/oder der Gierrate des Fahrzeuges abhängige Größe, wenigstens durch Eingriffe in die Radbremse und/oder in den Motor regelt. An dieser Stelle sei auf die vorstehend erwähnte Veröffentlichung "FDR - Die Fahrdynamikregelung von Bosch" bzw. auf das SAE-Paper 973284 verwiesen, in denen ein System zur Regelung einer die Fahrdynamik des Fahrzeuges beschreibenden Größe beschrieben ist.

Auf den Block 310 wird später noch ausführlich eingegangen. Der Block 310 wird bereits an dieser Stelle mit Blick auf die noch zu beschreibende Sensorik erwähnt. Da es sich bei dem Block 310, wie bereits oben erwähnt, um einen Regler zur Regelung einer die Fahrdynamik des Fahrzeuges beschreibenden Größe handeln soll, sind zur Realisierung dieser Regelung weitere Sensoren erforderlich. Je nachdem, über was für eine Bremsanlage das Fahrzeug verfügt, ist ein Sensor 301 erforderlich, mit dem eine Druckgröße Pvor erfaßt wird, die den vom Fahrer eingestellten Vordruck beschreibt. Durch die strichlinierte Darstellung soll angedeutet werden, daß der Sensor 301 bei einer hydraulischen Bremsanlage erforderlich ist, dagegen bei einer pneumatischen Bremsanlage nicht erforderlich ist. Ebenso ist ein Sensor 304 zur Erfassung der Gierrate omega des Fahrzeuges sowie ein Sensor 305 zur Erfassung der auf das Fahrzeug wirkenden Querbeschleunigung aq erforderlich. Die mit den Sensoren 301, 304 sowie 305 erfaßten Größen werden dem Block 310 zugeführt. An dieser Stelle sei nochmals erwähnt, daß die Sensoren 301, 304 sowie 305 nicht zwingend erforderlich sind. Wird mit dem Block 310 eine andere Art von Regler bzw. Schlupfregler realisiert, so kann auf diese Sensoren durchaus verzichtet werden.

Im Block 306 wird in bekannter Weise aus den Raddrehzahlen nixj eine die Geschwindigkeit des Fahrzeuges beschreibende Größe vf ermittelt, die den Blöcken 307 bzw. 309 zugeführt wird. Im Block 307 wird ausgehend von der Fahrzeuggeschwindigkeit vf und der Lenkwinkelgröße deltal eine Bahngröße r, die den Radius der momentan vom Fahrzeug gefahrenen Bahn, insbesondere der momentan vom Fahrzeug gefahrenen Kurve, beschreibt, ermittelt. Die Größe r wird beispielsweise unter Verwendung der Gleichung

$$r = \frac{1 + \left(\dfrac{vf}{vch}\right)^2}{deltal} \cdot il \cdot l \qquad\qquad (1)$$

ermittelt. In Gleichung (1) steht die Größe il für die Gesamtlenkübersetzung, die Größe vch stellt eine charakteristische Geschwindigkeit für das Fahrzeug dar und die Größe 1 stellt den Radstand dar. Die Größe r wird dem Block 310 zugeführt.

Neben den bereits erwähnten Größen nixj wird dem Block 308 ausgehend vom Block 310 eine Größe Fantr zugeführt. Diese Größe beschreibt die auf das Fahrzeug wirkende Antriebskraft. Sie wird im Block 310 in bekannter Weise wenigstens in Abhängigkeit von das Motorverhalten beschreibenden Größen ermittelt, als Beispiel sei hier die Motordrehzahl aufgeführt. Im Block 308 wird ausgehend von den ihm zugeführten Größen eine Massengröße M, die die Masse des Fahrzeuges beschreibt, ermittelt. Diese Massengröße wird dem Block 309 zugeführt.

Im Block 309 wird ausgehend von einem Geschwindigkeitsvergleich ermittelt, ob eine Reduzierung der Fahrzeuggeschwindigkeit erforderlich ist, so daß das Fahrzeug nicht um eine in Längsrichtung des Fahrzeugs orientierte Fahrzeugachse umkippt und/oder daß das Fahrzeug nicht in Querrichtung rutscht. Zur Durchführung dieses Geschwindigkeitsvergleiches werden dem Block 309 die bereits erwähnten Größen M, nixj, vf, r sowie deltal zugeführt. Außerdem werden dem Block 309 ausgehend vom Block 310 zwei Reibungsgrößen μ bzw. deltaμ sowie Größen mlix zugeführt. Die beiden Größen μ bzw. deltaμ stellen Reibungsgrößen dar, die die in der jeweiligen Fahrzeugsituation vorliegenden Reibverhältnisse zwischen Reifen und Fahrbahn beschreiben. Die Größe μ beschreibt den momentan vorliegenden Reibwert. Sie wird im Block 310 beispielsweise in Abhängigkeit der Längsbeschleunigung und der Querbeschleunigung geschätzt. Die Größe deltaμ beschreibt den Unterschied des Reibwertes auf der linken bzw. der rechten Fahrzeugseite. Bei einem Bremsvorgang wird die Größe deltaμ im Block 310 beispielsweise in Abhängigkeit der Radbremszylinderdrücke sowie der Radgeschwindigkeiten ermittelt. In diesem Zusammenhang sei auf die DE 35 35 843 A1 verwiesen. Alternativ kann die Größe deltaμ im Block 310 auch in Abhängigkeit des Motormomentes und der Radgeschwindigkeiten ermittelt werden. Hierzu sei beispielsweise auf die DE 37 35 673 A1 verwiesen.

Die Größen mlix stellen die achsbezogenen Radlasten dar. Sie werden im Block 310 in bekannter Weise beispielsweise aus den Raddrehzahlen ermittelt.

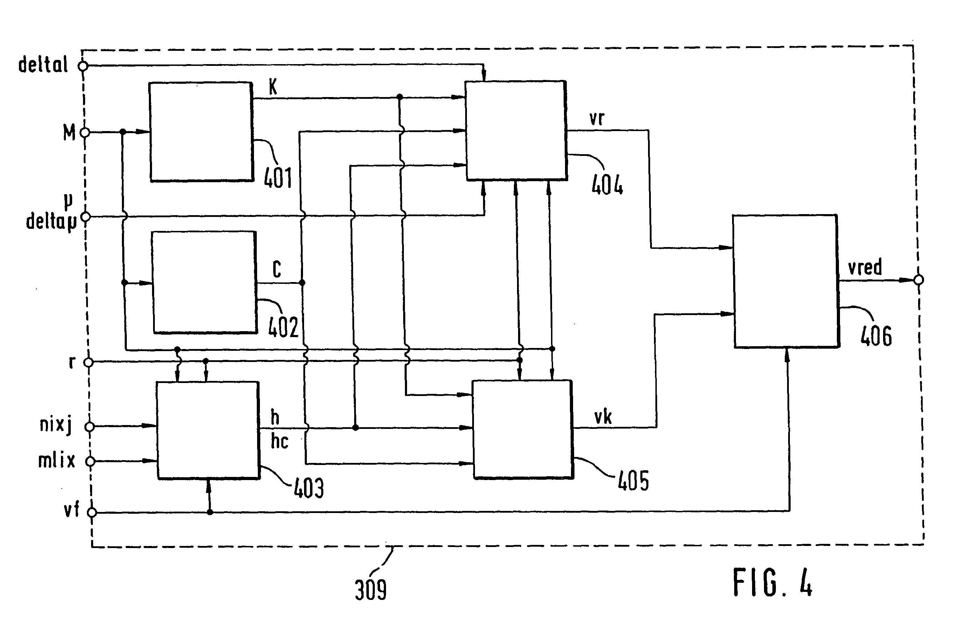

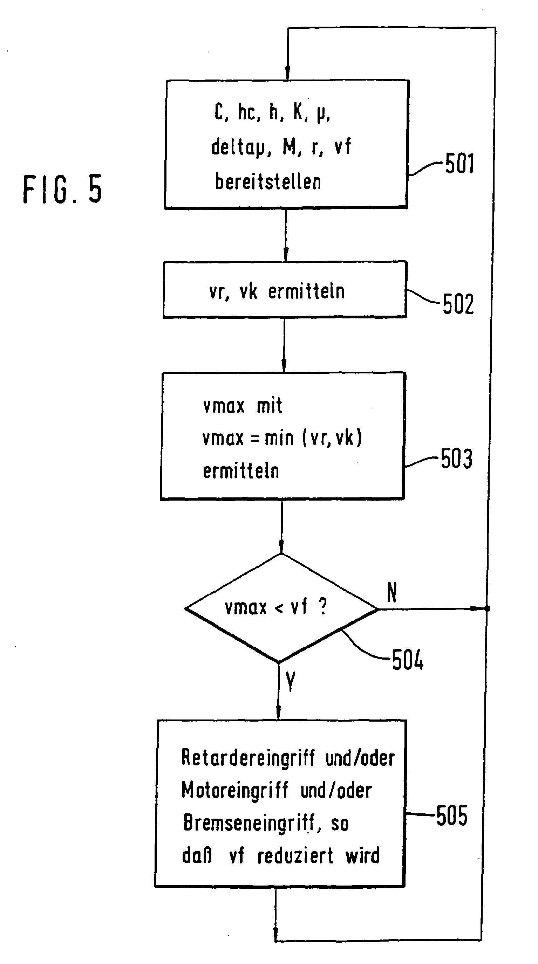

Das Ergebnis des Geschwindigkeitsvergleiches wird mit Hilfe der Größe vred ausgegeben. Dabei soll beispielsweise folgende Zuordnung gelten: Ist eine Reduzierung der Fahrzeuggeschwindigkeit erforderlich, so ist der Größe vred der Wert TRUE zugewiesen. Ist dagegen keine Reduzierung der Fahrzeuggeschwindigkeit erforderlich, so ist der Größe vred der Wert FALSE zugewiesen. Die Größe vred wird dem Block 310 zugeführt. Auf die Durchführung des Geschwindigkeitsvergleiches wird im Zusammenhang mit den Figuren 4 bzw. 5 ausführlich eingegangen.

Wie bereits oben erwähnt, stellt der Block 310 den im Steuergerät implementierten Fahrzeugregler dar. Bei diesem Fahrzeugregler handelt es sich beispielsweise um einen Regler zur Regelung einer die Fahrdynamik des Fahrzeuges beschreibenden Größe, wie er in der vorstehend erwähnten Veröffentlichung "FDR - Die Fahrdynamikregelung von Bosch" bzw. dem SAE-Paper 973284 beschrieben ist. Diese Regelung der die Fahrdynamik des Fahrzeuges beschreibenden Größe führt der Regler 310 in seiner Grundfunktion in Abhängigkeit der mit Hilfe des Sensors 301 (sofern vorhanden) sowie der Sensoren 302ixj, 303, 304 bzw. 305 erfaßten Größen, sowie der Größe mot2, die beispielsweise die Motordrehzahl oder das Motormoment des Motors 311 beschreibt, durch.

Ausgehend von den vorstehend aufgeführten Größen ermittelt der Regler 310 wenigstens für den Motor 311 bzw. die Aktuatoren 313ixj Ansteuersignale zur Realisierung der im Regler 310 als Grundfunktion implementierten Schlupfregelung. Zur Ansteuerung des Motors 311 wird im Block 310 eine Größe mot1 ermittelt und dem Motor zugeführt. Diese Größe mot1 repräsentiert beispielsweise die einzustellende Drosselklappenstellung. Für die Aktuatoren 313ixj, die beispielsweise als Radbremsen ausgebildet sind, werden im Block 310 Größen Aixj ermittelt und dem entsprechenden Aktuator zugeführt. Die Größen Aixj stellen beispielsweise die Ansteuersignale für die den Radbremsen zugeordneten Ventile dar. Ergänzend kann zu den Aktuatoren 313ixj ein Retarder 312 vorgesehen sein. Zur Ansteuerung des Retarders wird im Block 310 eine Größe Ret ermittelt und dem Retarder zugeführt.

An dieser Stelle sei erwähnt, daß es sich bei der Bremsanlage um eine hydraulische oder eine elektrohydraulische oder eine pneumatische oder eine elektropneumatische oder eine elektromechanische handeln kann.

Zusätzlich zu der im Regler 310 in der Grundfunktion implementierten Regelung hat der Regler 310 die Aufgabe, das Fahrzeug so zu stabilisieren, daß ein Umkippen des Fahrzeuges um eine in Längsrichtung des Fahrzeuges orientierte Fahrzeugachse bzw. ein Rutschen des Fahrzeuges in Querrichtung vermieden wird. Im Rahmen dieser Stabilisierung erfüllt der Regler zwei Aufgaben: Zum einen werden für den Fall, daß der Größe vred der Wert TRUE zugewiesen ist, entsprechende Ansteuersignale für den Motor 311, die Aktuatoren 313ixj, den Retarder 312 und aus dem Stand der Technik bekannte Mittel 314 zur Beeinflussung das Fahrwerkes erzeugt, so daß besagtes Umkippen bzw. Rutschen vermieden wird. Zur Ansteuerung der Mittel 314 erzeugt der Regler 310 eine Größe FW1. Gleichzeitig wird dem Regler 310 ausgehend von den Mitteln 314 eine FW2 zugeführt, die die momentanen Einstellungen des Fahrwerkes beschreibt und im Regler 310 als Rückmeldung für die Regelung erforderlich ist. Die Ansteuerung zur Vermeidung des Umkippens bzw. des Rutschens kann der gemäß der Grundfunktion stattfindenden Ansteuerung überlagert sein. Oder die Ansteuerung gemäß der Grundfunktion wird für die Zeit ausgeblendet, in der eine Ansteuerung zur Vermeidung des Umkippens bzw. des Rutschens durchgeführt wird. Zum anderen werden im Regler 310 die bereits vorstehend aufgeführten Größen $\mu$, delta$\mu$, mlix sowie Fantr ermittelt und den entsprechenden Blöcken zugeführt.

Nachfolgend wird Figur 4 behandelt, in der der Block 309 in einer größeren Detailliertheit dargestellt ist.

In einem Block 401 wird ausgehend von der Massengröße M die Ladungsverschiebungsgröße K ermittelt, die sowohl einem Block 404 als auch einem Block 405 zugeführt wird. Die Ermittlung der Ladungsverschiebungsgröße K läuft beispielsweise folgendermaßen ab: Im Vorfeld wird für ein Fahrzeug oder eine Fahrzeugkombination, bestehend aus einer Zugmaschine und einem Anhänger oder Auflieger, für eine bekannte Ladung bzw. für eine Flüssigkeit mit bekannter Dichte durch Fahrversuche die Größe K in Abhängigkeit der Fahrzeugmasse M bestimmt. Aus den Wertepaaren der Größen K bzw. M wird ein Kennlinienfeld generiert, welches im Block 401 abgelegt ist. Somit kann in Abhängigkeit des Wertes der dem Block 401 zugeführten Größe M ein Wert für die Größe K ermittelt werden. Die Ermittlung der Größe K allein in Abhängigkeit von der Fahrzeugmasse eignet sich dann, wenn die Zugmaschine mit einem bekannten Auflieger oder Anhänger betrieben wird, und wenn die Dichte der flüssigen Ladung bekannt ist.

Die Ermittlung der Größe K kann dahingehend verbessert werden, daß die Größe K für eine beliebige Fahrzeugkombination und eine beliebige Ladung, d.h. für eine Flüssigkeit beliebiger Dichte bestimmt werden kann. Dies hat folgenden Hintergrund: Zum einen hängt die Größe K in starkem Maße vom jeweiligen Anhänger bzw. Auflieger ab, da sich in Abhängigkeit der Form der Vorrichtung, die zur Aufnahme der Ladung vorhanden ist, ein unterschiedliches Verlagerungsvermögen der Flüssigkeit und somit des Schwerpunktes ergibt. Zum anderen hängt die Größe K stark davon ab, wie groß das Volumen der Ladung ist, die sich während der Fahrt verlagern kann. Beispielsweise weist ein Tanklastzug mit einem zu 20% gefüllten Tank eine stärkere Verlagerung des Schwerpunktes auf als ein Tanklastzug mit einem zu 70% gefüllten Tank. Folglich kommt vor allem bei flüssiger Ladung der Dichte der Ladung eine große Bedeutung zu, da sie bei vorgegebener Masse das Volumen der Ladung und somit die Verlagerungsfähigkeit des Schwerpunktes in einem starken Maße mitbestimmt. Folglich kann vorgesehen sein, im Block 401 in Abhängigkeit des verwendeten Aufliegers bzw. Anhängers und in Abhängigkeit des Volumens der Ladung verschiedene Kennlinienfelder abzulegen. Zur Ermittlung der Größe K wäre dann allerdings im Steuergerät eine Auflieger- bzw. Anhängererkennnung erforderlich, bzw. müßte dem Steuergerät in geeigneter Weise die Dichte der Ladung mitgeteilt werden. In Abhängigkeit des erkannten Anhängers bzw. Aufliegers und in Abhängigkeit des ermittelten Ladungsvolumens kann dann im Block 401 die Größe K ermittelt werden. Das Ladungsvolumen wird bei bekannter Masse des Leerfahrzeuges aus der Fahrzeugmasse und der Dichte der Ladung ermittelt. Alternativ kann das Volumen der flüssigen Ladung auch während des Belade- bzw. Entladevorganges der Vorrichtung zur Aufnahme der Ladung direkt ermittelt werden. Dies ist deshalb möglich, da beispielsweise Tanklastzüge Anzeigevorrichtungen aufweisen, die das Volumen der zugeführten bzw. abgeführten flüssigen Ladung anzeigen. Zur Ermittlung des aktuellen Volumenwertes ist lediglich das zugeführte Volumen bzw. das abgeführte Volumen zum letzten Volumenwert, der vorteilhafterweise im Steuergerät abgelegt ist, zu addieren bzw. von diesem zu subtrahieren.

Zu der Problematik der Ladungsverschiebung sei an dieser Stelle weiterführend auf den im VDI-Verlag, Düsseldorf, 1970, in der Zeitschrift "Deutsche Kraftfahrtforschung und Straßenverkehrstechnik", Heft 200, erschienenen Forschungsbericht "Die Kippgrenze von Sattelkraftfahrzeugen mit fester und flüssiger Ladung" von H. Isermann verwiesen.

Alternativ kann bei flüssiger Ladung unbekannter Dichte vorgesehen sein, daß für diese Flüssigkeit eine Referenzdichte angenommen wird, und die Ermittlung der Größe K mit Hilfe dieser Referenzdichte durchgeführt wird. Dabei ist allerdings zu beachten, daß die Referenzdichte so gewählt wird, daß eine eventuell drohende Kippgefahr bzw. Rutschgefahr immer noch realistisch eingeschätzt werden kann.

In einem Block 402 wird in Abhängigkeit der Größe M die Torsionsgröße C ermittelt, die sowohl einem Block 404 als auch einem Block 405 zugeführt wird. Die Ermittlung der Torsionsgröße C läuft entsprechend der der Ladungsverschiebungsgröße K ab. Im Vorfeld wird für ein Fahrzeug oder eine Fahrzeugkombination durch Fahrversuche die Größe C in Abhängigkeit der Fahrzeugmasse M bestimmt. Aus den Wertepaaren der Größen C bzw. M wird ein Kennlinienfeld generiert, welches im Block 402 abgelegt ist. Somit kann in Abhängigkeit des Wertes der dem Block 402 zugeführten Größe M ein Wert für die Größe C ermittelt werden. Die Ermittlung des Kennlinienfeldes im Vorfels kann durch Simulationsberechnungen unterstützt werden. Eine Verbesserung der Ermittlung der Größe C mit Blick auf beliebige Fahrzeugkombinationen kann entsprechend der bei der Ladungsverschiebungsgröße K erreicht werden.

In einem Block 403 werden die erste Höhengröße h und die zweite Höhengröße hc ermittelt. Die Ermittlung der ersten Höhengröße läuft beispielsweise folgendermaßen ab: Zunächst werden in Abhängigkeit der Fahrzeuggeschwindigkeit vf, der Raddrehzahlen nixj und der Bahngröße r dynamische Rollradien, die das Verhalten des jeweiligen Rades beschreiben, ermittelt. Ausgehend von diesen dynamischen Rollradien wird unter Berücksichtigung der achsbezogenen Radlasten mlix, der Fahrzeuggeschwindigkeit vf und der Bahngröße r die erste Höhengröße h, die der Schwerpunktshöhe entspricht, h ermittelt. Die Ermittlung der zweiten Höhengröße hc erfolgt mit Hilfe eines Kennlinienfeldes. Auch dieses Kennlinienfeld wird im Vorfeld beispielsweise durch Fahrversuche in Abhängigkeit der Größe M ermittelt. Unter Verwendung der zugeführten Größe M wird im Block 403 ein Wert für die zweite Höhengröße ermittelt. Die beiden Höhengrößen h bzw. hc werden sowohl dem Block 404 als auch dem Block 405 zugeführt. Desweiteren werden den Blöcken 404 bz. 405 noch die Bahngröße r sowie die Massengröße M zugeführt. Dem Block 404 werden zusätzlich die erste Reibungsgröße μ und die zweite Reibungsgröße deltaμ zugeführt.

Im Block 404 wird der zweite Grenzwert vr in Abhängigkeit der dem Block 404 zugeführten Größen ermittelt und dem Block 406 zugeführt. Allgemein, d.h. wenn die torsionsbedingten und die ladungsverschiebungsbedingten Einflüsse berücksichtigt werden, ergibt sich dieser zweite Grenzwert vr beispielsweise gemäß der Gleichung

$$vr = \sqrt{\frac{g \cdot R \cdot C \cdot r \cdot \left(\mu r - \frac{1}{2}\text{delta}\mu\right)}{R \cdot C - \text{delta}\mu \cdot (hc + hsc \cdot M \cdot g + K \cdot C \cdot g)}} \qquad (2).$$

Die Gleichung (2) soll für das in Figur 2a dargestellte Fahrzeug gelten, d.h. den Sachverhalt bei Durchfahren einer Linkskurve beschreiben. In Gleichung (2) entspricht die Größe g der Gravitationskonstanten (9,81 m/s[2]) und die Größe R entspricht der Spurweite. Die Größe μr beschreibt den Reibwert auf der rechten Fahrzeugseite und wird ausgehend von den Reibungsgrößen μ bzw. deltaμ ermittelt. Die Größe hsc beschreibt den Abstand des Fahrzeugschwerpunktes von der in Längsrichtung des Fahrzeuges orientierten Fahrzeugachse, z.B. 206a in Fig. 2a, um die das Fahrzeug, in Reaktion auf eine auf das Fahrzeug einwirkende Kraft verdreht und/oder verwunden und/oder ausgelenkt wird. Die Größe hsc wird aus der ersten und der zweiten Höhengröße ermittelt. Für eine Rechtskurve gilt Gleichung (2) entsprechend, allerdings ist anstelle von μr in diesem Fall μl zu verwenden, welches ebenfalls ausgehend von den Reibungsgrößen μ bzw. deltaμ ermittelt wird. Die Feststellung, ob eine Links- oder eine Rechtskurve vorliegt, wird in Abhängigkeit der dem Block 404 zugeführten Lenkwinkelgröße deltal vorgenommen.

Wird ein Fahrzeug betrachtet, welches keine bewegliche Ladung transportiert und es somit keine ladungsverschiebungsbedingten Einflüsse gibt, bzw. bei dem die ladungsverschiebungsbedingten Einflüsse vernachlässigbar sind, so wird die Größe vr gemäß einer einfacheren Gleichung ermittelt, die sich aus der Gleichung (2) für K=0 ergibt. Dies soll beispielsweise für die Fahrzeuge der Figuren 2b bzw. 2d gelten. Treten gleichzeitig keine unterschiedlichen Reibwerte auf der linken bzw. der rechten Fahrzeugseite auf, so ergibt sich die Gleichung zur Ermittlung von vr aus der Gleichung (2) für K=0 und für deltaμ=0. Für den Fall, daß gleichzeitig keine torsionsbedingten und keine ladungsverschiebungsbedingten Einflüsse vorliegen, und daß keine unterschiedlichen Reibwerte zwischen der linken bzw. der rechten Fahrzeugseite vorliegen, wird die Größe vr gemäß einer Gleichung ermittelt, die sich aus Gleichung (2) für K=0, deltaμ=0 und C=∞ ergibt. Dies soll beispielsweise für das in Fig. 2c dargestellte Fahrzeug gelten.

Im Block 405 wird der erste Grenzwert vk in Abhängigkeit der dem Block 405 zugeführten Größen ermittelt und dem Block 406 zugeführt. Allgemein, d.h. wenn die torsionsbedingten und die ladungsverschiebungsbedingten Einflüsse berücksichtigt werden, ergibt sich dieser erste Grenzwert vr beispielsweise gemäß der Gleichung

$$vk = \sqrt{\frac{g}{2} \cdot \frac{R \cdot C \cdot r \cdot}{g \cdot hsc \cdot M + K \cdot C \cdot g + h \cdot C}} \qquad (3).$$

Die Gleichung (3) soll für das in Figur 2a dargestellte Fahrzeug gelten. Abgesehen von den Ausführungen bzgl. der beiden Reibwerte gelten für Gleichung (3) die oben für Gleichung (2) aufgeführten Überlegungen entsprechend.

Die vorstehend aufgeführten Fälle, die ausgehend von den Gleichungen (2) bzw. (3) zu unterschiedlichen Ermittlungsgleichungen für die Grenzwerte vr bzw. vk führen, werden durch die Ermittlung der dem Block 309 zugeführten Größen erfaßt. Alternativ kann vorgesehen sein, wenn beispielsweise für eine Fahrzeugkombination bekannt ist, daß sie nicht für den Transport flüssiger Ladung eingesetzt wird, die entsprechende vereinfachte Gleichung in den Blöcken 404 bzw. 405 abzulegen.

Dem Block 406 wird zusätzlich zu den beiden Grenzwerten vr bzw. vk die Fahrzeuggeschwindigkeit vf zugeführt. In Abhängigkeit dieser Größen wird ermittelt, ob für das Fahrzeug eine Stabilisierung erforderlich ist. Das Ergebnis dieser Ermittlung wird mit Hilfe der Größe vred ausgegeben. Zunächst wird im Block 406 aus den beiden Grenzwerten vr bzw. vk der Grenzwert mit dem kleineren Wert als Vergleichsgröße ausgewählt. Mit dieser Vergleichsgröße wird die Fahrzeuggeschwindigkeit vf verglichen. Ist die Fahrzeuggeschwindigkeit vf größer als die Vergleichsgröße, so deutet dies auf einen instabilen Zustand des Fahrzeuges hin und eine Stabilisierung des Fahrzeuges ist erforderlich. Der Größe vred wird der Wert TRUE zugewiesen. Ist dagegen die Fahrzeuggeschwindigkeit kleiner als die Vergleichsgröße, so deutet dies auf einen stabilen Zustand des Fahrzeuges hin und eine Stabilisierung des Fahrzeuges dürfte nicht erforderlich sein. Entsprechend wird der Größe vred der Wert FALSE zugewiesen.

Im folgenden wird Figur 5 beschrieben, die mit Hilfe eines Flußdiagrammes den Ablauf des erfindungsgemäßen Verfahrens zeigt. Das erfindungsgemäße Verfahren beginnt mit einem Schritt 501, in welchem die Größen C, hc, h, K, μ, deltaμ, M, r sowie vf bereitgestellt werden. Bzgl. der Ermittlung dieser Größen sei auf die Beschreibung der Blöcke 306, 307, 308, 310, 401, 402 bzw. 403 verwiesen. An den Schritt 501 schließt sich ein Schritt 502 an, in dem die beiden Grenzwerte vr bzw. vk ermittelt werden. Hierzu sei auf die Beschreibung der Blöcke 404 bzw. 405 verwiesen.

Anschließend an den Schritt 502 wird ein Schritt 503 ausgeführt, in welchem der kleinere der beiden Grenzwerte vr bzw. vk als Vergleichsgröße vmax ermittelt wird. Im nachfolgenden Schritt 504 wird die Fahrzeuggeschwindigkeit vf mit der Vergleichsgröße vmax verglichen. An dieser Stelle sei auf die Beschreibung des Blockes 406 verwiesen. Allerdings ist in Figur 5 die Größe vred nicht dargestellt. Ist die Fahrzeuggeschwindigkeit vf kleiner als die Vergleichsgröße vmax, so wird anschließend an den Schritt 504 erneut der Schritt 501 ausgeführt. Dies entspricht der Zuweisung des Wertes FALSE an die Größe vred. Wird dagegen im Schritt 504 festgestellt, daß die Fahrzeuggeschwindigkeit größer als die Vergleichsgröße vmax ist, so wird anschließend an den Schritt 504 ein Schritt 505 ausgeführt. In dem Schritt Retardereingriffe und/oder Motoreingriffe und/oder Bremseneingriffe so durchgeführt, daß die Fahrzeuggeschwindigkeit reduziert wird und somit das Fahrzeug stabilisiert wird. Auf die Darstellung der Ansteuersignale für die einzelnen vorstehend aufgeführten Komponenten wurde in Figur 5 verzichtet. Anschließend an den Schritt 505 wird erneut der Schritt 501 ausgeführt.

Abschließend sei zum einen bemerkt, daß die in der Beschreibung gewählte Form des Ausführungsbeispiels sowie die in den Figuren gewählte Darstellung keine einschränkende Wirkung auf die erfindungswesentliche Idee darstellen soll. Zum anderen seien einige Punkte nochmals zusammengefaßt: Mit dem erfindungsgemäßen Verfahren wird neben dem Schleuderverhalten des Fahrzeuges in der Ebene auch die Wankbewegung des Fahrzeuges um eine in Längsrichtung des Fahrzeuges orientierte Fahrzeugachse erfaßt wird. Diese Wankbewegung kann je nach Beladungszustand des Fahrzeuges und Straßenbelag verschieden stark sein und unter Umständen zum Umkippen des Fahrzeuges führen. Das erfindungsgemäße Verfahren bzw. die erfindungsgemäße Vorrichtung ist so konzipiert, daß die hierfür erforderliche Sensorik bei Fahrzeugkombinationen im Zugfahrzeug untergebracht ist.

**Patentansprüche**

1.  Verfahren zur Stabilisierung eines Fahrzeuges, insbesondere zur Vermeidung des Umkippens eines Fahrzeuges um eine in Längsrichtung des Fahrzeuges orientierte Fahrzeugachse und/oder zur Vermeidung des Rutschens des Fahrzeuges in Querrichtung,
    bei dem eine Torsionsgröße (C) ermittelt wird, die charakterisiert, wie sich das Fahrzeug in Reaktion auf eine auf das Fahrzeug einwirkende Kraft, insbesondere in Reaktion auf eine Querkraft, um eine in Längsrichtung des Fahrzeuges orientierte Fahrzeugachse verhält, insbesondere in welchem Maße das Fahrzeug um diese Fahrzeugachse aufgrund einer auf das Fahrzeug einwirkenden Kraft verdreht und/oder verwunden und/oder ausgelenkt wird, und/oder

bei dem eine Ladungsverschiebungsgröße (K) ermittelt wird, insbesondere für Fahrzeuge mit beweglicher, vorzugsweise flüssiger, Ladung, die charakterisiert, wie sich die Ladung des Fahrzeuges in Reaktion auf eine auf das Fahrzeug einwirkende Kraft, insbesondere in Reaktion auf eine Querkraft, verhält, insbesondere in welchem Maße die Ladung des Fahrzeuges aufgrund einer auf das Fahrzeug einwirkenden Kraft verschoben und/oder ausgelenkt wird,

bei dem eine Geschwindigkeitsgröße (vf), die die Fahrzeuggeschwindigkeit beschreibt, ermittelt wird,

bei dem ein Grenzwert (vr, vk) für die Fahrzeuggeschwindigkeit ermittelt wird, wobei der Grenzwert wenigstens in Abhängigkeit des Wertes der Torsionsgröße und/oder des Wertes der Ladungsverschiebungsgröße ermittelt wird, und

bei dem in Abhängigkeit der Geschwindigkeitsgröße und des Grenzwertes, ein Vergleich durchgeführt wird, und bei dem in Abhängigkeit des Vergleichs Eingriffe zur Stabilisierung des Fahrzeuges durchgeführt werden.

2. Verfahren nach Anspruch 1, **dadurch gekennzeichnet,**
**daß** die Torsionsgröße wenigstens in Abhängigkeit einer Massengröße (M), die die Masse des Fahrzeuges beschreibt, ermittelt wird.

3. Verfahren nach Anspruch 1, **dadurch gekennzeichnet,**
**daß** eine Massengröße (M) ermittelt wird, die die Masse des Fahrzeuges beschreibt, insbesondere wird die Massengröße wenigstens in Abhängigkeit einer die auf das Fahrzeug wirkenden Antriebskraft (Fantr) beschreibenden Größe und die Raddrehzahlen beschreibenden Größen (nixj) ermittelt, und
**daß** der wenigstens eine Grenzwert für die Fahrzeuggeschwindigkeit in Abhängigkeit dieser Massengröße ermittelt wird.

4. Verfahren nach Anspruch 1, **dadurch gekennzeichnet,**
**daß** eine Massengröße ermittelt wird, die die Masse des Fahrzeuges beschreibt, und daß die Ladungsverschiebungsgröße in Abhängigkeit dieser Massengröße ermittelt wird, insbesondere wird bei beweglicher, vorzugsweise flüssiger Ladung, in Abhängigkeit dieser Massengröße das Volumen der Ladung ermittelt, und die Ladungsverschiebungsgröße in Abhängigkeit dieses Volumens ermittelt, und/oder
**daß** eine Größe, die die am Fahrzeug zur Aufnahme der Ladung vorhandene Vorrichtung charakterisiert, ermittelt wird und/oder vorgegeben ist, insbesondere hängt der Wert dieser Größe bei beweglicher, vorzugsweise flüssiger, Ladung, wenigstens von der Form der Vorrichtung ab, und daß die Ladungsverschiebungsgröße in Abhängigkeit dieser Größe ermittelt wird, und/oder
**daß** bei flüssiger Ladung während des Belade- bzw. Entladevorganges der Vorrichtung zur Aufnahme der Ladung das Volumen der flüssigen Ladung direkt ermittelt wird, und daß die Ladungsverschiebungsgröße in Abhängigkeit dieses Volumens ermittelt wird.

5. Verfahren nach Anspruch 1, **dadurch gekennzeichnet,**
**daß** für den Fall, bei dem die Geschwindigkeitsgröße größer als der Grenzwert ist, wenigstens durch Retardereingriffe und/oder durch Motoreingriffe und/oder durch Bremseneingriffe an wenigstens einem Rad, die Fahrzeuggeschwindigkeit so weit reduziert wird, daß die sich aufgrund der Eingriffe ergebende Geschwindigkeitsgröße kleiner als der Grenzwert ist, vorzugsweise werden hierzu die Eingriffe in Abhängigkeit des Abstandes der Geschwindigkeitsgröße von dem Grenzwert durchgeführt.

6. Verfahren nach Anspruch 1, **dadurch gekennzeichnet,**
**daß** zwei Grenzwerte (vr, vk) ermittelt werden, wobei ein erster Grenzwert (vk) einer die Kippgefahr des Fahrzeuges beschreibenden Größe entspricht und/oder wobei ein zweiter Grenzwert (vr) einer die Rutschgefahr des Fahrzeuges, insbesondere in Querrichtung, beschreibenden Größe entspricht, insbesondere wird zur Durchführung des Vergleiches der Grenzwert, der den kleineren Wert aufweist, ausgewählt.

7. Verfahren nach Anspruch 6, **dadurch gekennzeichnet,**
**daß** wenigstens eine Reibungsgröße ($\mu$, delta$\mu$) ermittelt wird, die die in der jeweiligen Fahrsituation vorliegenden Reibverhältnisse zwischen Reifen und Fahrbahn beschreibt, vorzugsweise werden zwei Reibungsgrößen, eine erste, die den momentan vorliegenden Reibwert beschreibt, und eine zweite, die den Unterschied des Reibwertes auf der linken bzw. der rechten Fahrzeugseite beschreibt, ermittelt, und
**daß** wenigstens einer der Grenzwerte für die Fahrzeuggeschwindigkeit in Abhängigkeit dieser wenigstens einen Reibungsgröße ermittelt wird.

8. Verfahren nach Anspruch 6, **dadurch gekennzeichnet,**

**daß** eine erste Höhengröße (h) ermittelt wird, die den Abstand des Fahrzeugschwerpunktes von der Fahrbahn beschreibt, insbesondere wird diese erste Höhengröße wenigstens in Abhängigkeit von die Raddrehzahlen beschreibenden Größen (nixj) ermittelt, und daß wenigstens ein Grenzwert für die Fahrzeuggeschwindigkeit in Abhängigkeit dieser ersten Höhengröße ermittelt wird, und/oder

**daß** eine zweite Höhengröße (hc) ermittelt wird, die den Abstand einer in Längsrichtung des Fahrzeuges orientierten Fahrzeugachse, um die das Fahrzeug, in Reaktion auf eine auf das Fahrzeug einwirkende Kraft, insbesondere in Reaktion auf eine Querkraft, verdreht und/oder verwunden und/oder ausgelenkt wird, von der Fahrbahn beschreibt, insbesondere wird diese zweite Höhengröße wenigstens in Abhängigkeit einer Massengröße (M), die die Masse des Fahrzeuges beschreibt, ermittelt, und daß wenigstens ein Grenzwert für die Fahrzeuggeschwindigkeit in Abhängigkeit dieser zweiten Höhengröße ermittelt wird.

9. Verfahren nach Anspruch 1, **dadurch gekennzeichnet,**

   **daß** der wenigstens eine Grenzwert für die Fahrzeuggeschwindigkeit in Abhängigkeit einer Bahngröße (r), die den Radius der momentan vom Fahrzeug gefahrenen Bahn, insbesondere der momentan vom Fahrzeug durchfahrenen Kurve, beschreibt, ermittelt wird, insbesondere wird die Bahngröße in Abhängigkeit der Geschwindigkeitsgröße (vf) und einer Lenkwinkelgröße (deltal), die den Lenkwinkel des Fahrzeuges beschreibt, ermittelt.

10. Vorrichtung zur Stabilisierung eines Fahrzeuges, insbesondere zur Vermeidung des Umkippens eines Fahrzeuges um eine in Längsrichtung des Fahrzeuges orientierte Fahrzeugachse und/oder zur Vermeidung des Rutschens des Fahrzeuges in Querrichtung,

    die erste Mittel (402) enthält, mit denen eine Torsionsgröße ermittelt wird, die charakterisiert, wie sich das Fahrzeug in Reaktion auf eine auf das Fahrzeug einwirkende Kraft, insbesondere in Reaktion auf eine Querkraft, um eine in Längsrichtung des Fahrzeuges orientierte Fahrzeugachse verhält, insbesondere in welchem Maße das Fahrzeug um diese Fahrzeugachse aufgrund einer auf das Fahrzeug einwirkenden Kraft verdreht und/oder verwunden und/oder ausgelenkt wird, und/oder

    die zweite Mittel (401) enthält, mit denen eine Ladungsverschiebungsgröße, insbesondere für Fahrzeuge mit beweglicher, vorzugsweise flüssiger Ladung, ermittelt wird, die charakterisiert, wie sich die Ladung des Fahrzeuges in Reaktion auf eine auf das Fahrzeug einwirkende Kraft, insbesondere in Reaktion auf eine Querkraft, verhält, insbesondere in welchem Maße die Ladung des Fahrzeuges aufgrund einer auf das Fahrzeug einwirkenden Kraft verschoben und/oder ausgelenkt wird, die dritte Mittel (306) enthält, mit denen eine Geschwindigkeitsgröße, die die Fahrzeuggeschwindigkeit beschreibt, ermittelt wird,

    die vierte Mittel (404, 405) enthält, mit denen wenigstens ein Grenzwert für die Fahrzeuggeschwindigkeit ermittelt wird, wobei der wenigstens eine Grenzwert wenigstens in Abhängigkeit des Wertes der Torsionsgröße und/oder des Wertes der Ladungsverschiebungsgröße ermittelt wird,

    die fünfte Mittel (406) enthält, mit denen in Abhängigkeit der Geschwindigkeitsgröße und des Grenzwertes ein Vergleich durchgeführt wird, und

    die sechste Mittel (310, 311, 312, 313ixj, 314) enthält, mit denen in Abhängigkeit des durchgeführten Vergleichs Eingriffe zur Stabilisierung des Fahrzeuges durchgeführt werden.

**Claims**

1. Method for stabilizing a vehicle, in particular for preventing a vehicle from tipping over about a vehicle axis which is oriented in the longitudinal direction of the vehicle and/or for preventing the vehicle from skidding in the lateral direction,

   in which a torsional variable (C) is determined which characterizes how the vehicle behaves in reaction to a force acting on the vehicle, in particular in reaction to a lateral force, about a vehicle axis which is oriented in the longitudinal direction of the vehicle, in particular to what degree the vehicle is rotated and/or twisted and/or deflected about this vehicle axis owing to a force acting on the vehicle, and/or

   in which a load shifting variable (K) is determined, in particular for vehicles with a moving, preferably fluid, load, which characterizes how the load of the vehicle behaves in reaction to a force acting on the vehicle, in particular in reaction to a lateral force, in particular to what degree the load of the vehicle is shifted and/or deflected owing to a force acting on the vehicle,

   in which a velocity variable (vf) which describes the velocity of the vehicle is determined,

   in which a limiting value (vr, vk) for the velocity of the vehicle is determined, in which case the limiting value is determined at least as a function of the value of the torsional variable and/or of the value of the load shifting variable, and

   in which a comparison is carried out as a function of the velocity variable and the limiting value, and

in which interventions for stabilizing the vehicle are carried out as a function of the comparison.

2.  Method according to Claim 1, **characterized in that** the torsion variable is determined at least as a function of a mass variable (M) which describes the mass of the vehicle.

3.  Method according to Claim 1, **characterized in that** a mass variable (M) is determined which describes the mass of the vehicle, in particular the mass variable is determined at least as a function of a variable which describes the drive force (Fantr) acting on the vehicle, and the variables (nixj) describing the wheel speeds are determined, and **in that** the at least one limiting value for the velocity of the vehicle is determined as a function of this mass variable.

4.  Method according to Claim 1, **characterized in that** a mass variable is determined which describes the mass of the vehicle, and **in that** the load shifting variable is determined as a function of this mass variable, in particular when there is a moving, preferably fluid load, the volume of the load is determined as a function of this mass variable and the load shifting variable is determined as a function of this volume, and/or
    **in that** a variable which characterizes the device which is present on the vehicle for receiving the load is determined and/or predefined, in particular the value of this variable in the case of a moving, preferably fluid load, depends at least on the form of the device, and **in that** the load shifting variable is determined as a function of this variable, and/or
    **in that** in the case of the fluid load the volume of the fluid load is determined directly during the loading or unloading process of the device for receiving the load, and **in that** the load shifting variable is determined as a function of this volume.

5.  Method according to Claim 1, **characterized in that** if the velocity variable is greater than the limiting value, the velocity of the vehicle is reduced at least by retarder interventions and/or by engine interventions and/or by brake interventions on at least one wheel to such an extent that the velocity variable which results owing to the interventions is smaller than the limiting value, preferably for this purpose the interventions are carried out as a function of the distance between the velocity variable and the limiting value.

6.  Method according to Claim 1, **characterized in that** two limiting values (vr, vk) are determined, with a first limiting value (vk) corresponding to a variable which describes the risk of the vehicle tipping, and/or where a second limiting value (vr) corresponding to a variable which describes the risk of the vehicle skidding, in particular in the lateral direction, and in particular the limiting value which has the smaller value is selected for carrying out the comparison.

7.  Method according to Claim 6, **characterized in that** at least one frictional variable ($\mu$, delat$\mu$) is determined which describes the frictional conditions between the tyre and carriageway in the respective driving situation, preferably two frictional variables, a first frictional variable which describes the instantaneous coefficient of friction, and a second frictional variable which describes the difference between the coefficient of friction on the left-hand side of the vehicle and that on the right-hand side of the vehicle are determined, and **in that** at least one of the limiting values for the velocity of the vehicle is determined as a function of this at least one frictional variable.

8.  Method according to Claim 6, **characterized in that** a first height variable (h) is determined which describes the distance between the centre of gravity of the vehicle and the carriageway, in particular this first height variable is determined at least as a function of variables (nixj) which describe the wheel speeds, and **in that** at least one limiting value is determined for the velocity of the vehicle as a function of this first height variable, and/or
    **in that** a second height variable (hc) is determined which describes the distance between a vehicle axis which is oriented in the longitudinal direction of the vehicle and about which the vehicle is rotated and/or twisted and/or deflected in reaction to a force acting on the vehicle, in particular in reaction to a lateral force, and the carriageway, in particular this second height variable is determined at least as a function of a mass variable (M) which describes the mass of the vehicle, and **in that** at least one limiting value is determined for the velocity of the vehicle as a function of this second height variable.

9.  Method according to Claim 1, **characterized in that** the at least one limiting value for the velocity of the vehicle is determined as a function of a path variable (r) which describes the radius of the path being instantaneously travelled on by the vehicle, in particular the bend being instantaneously travelled through by the vehicle, in particular the path variable is determined as a function of the velocity variable (vf) and a steering angle variable (deltal) which describes the steering angle of the vehicle.

10. Device for stabilizing a vehicle, in particular for preventing a vehicle from tipping over about a vehicle axis which is oriented in the longitudinal direction of the vehicle and/or for preventing the vehicle from skidding in the lateral direction,

which contains first means (402) with which a torsional variable is determined which characterizes how the vehicle behaves in reaction to a force acting on the vehicle, in particular in reaction to a lateral force, about a vehicle axis which is oriented in the longitudinal direction of the vehicle, in particular to what degree the vehicle is rotated and/or twisted and/or deflected about this vehicle axis owing to a force acting on the vehicle, and/or

which contains second means (401) with which a load shifting variable is determined, in particular for vehicles with a moving, preferably fluid load, which characterizes how the load of the vehicle behaves in reaction to a force acting on the vehicle, in particular in reaction to a lateral force, in particular to what degree the load of the vehicle is shifted and/or deflected owing to a force acting on the vehicle,

which contains third means (306) with which a velocity variable which describes the velocity of the vehicle is determined,

which contains fourth means (404, 405) with which at least one limiting value for the velocity of the vehicle is determined, with the at least one limiting value being determined at least as a function of the value of the torsional variable and/or of the value of the load shifting variable,

which contains fifth means (406) with which a comparison is carried out as a function of the velocity variable and the limiting value, and

which contains sixth means (310, 311, 312, 313ixj, 314) with which interventions for stabilizing the vehicle are carried out as a function of the comparison which is carried out.

## Revendications

1. Procédé pour stabiliser un véhicule, en particulier pour éviter son renversement autour d'un axe orienté dans la direction longitudinale du véhicule et/ou pour éviter le dérapage du véhicule en direction transversale, selon lequel

   - on détermine une grandeur de torsion (C), qui caractérise le comportement du véhicule autour d'un axe orienté dans la direction longitudinale du véhicule, en réaction à une force agissant sur le véhicule, en particulier en réaction à une force transversale, et notamment dans quelle mesure le véhicule se tord et/ou est distordu et/ou est dévié autour de cet axe à cause d'une force agissant sur le véhicule, et/ou
   - on détermine une grandeur de déplacement du chargement (K), en particulier pour des véhicules avec un chargement mobile, de préférence liquide, qui caractérise le comportement du chargement du véhicule en réaction à une force agissant sur le véhicule, en particulier en réaction à une force transversale, et notamment dans quelle mesure le chargement du véhicule est déplacé et/ou dévié à cause d'une force agissant sur le véhicule,
   - on détermine une grandeur de vitesse (vf), qui décrit la vitesse du véhicule,
   - on détermine une valeur limite (vr, vk) pour la vitesse du véhicule, en déterminant la valeur limite au moins en fonction de la valeur de la grandeur de torsion et/ou de la valeur de la grandeur de déplacement du chargement,
   - on procède à une comparaison en fonction de la grandeur de vitesse et de la valeur limite, et
   - on effectue des interventions pour stabiliser le véhicule en fonction de la comparaison.

2. Procédé selon la revendication 1,
   **caractérisé en ce qu'**
   on détermine la grandeur de torsion au moins en fonction d'une grandeur de masse (M), qui décrit la masse du véhicule.

3. Procédé selon la revendication 1,
   **caractérisé en ce qu'**
   on détermine une grandeur de masse (M), qui décrit la masse du véhicule, en particulier la grandeur de masse au moins en fonction d'une grandeur décrivant la force d'entraînement (Fantr) agissant sur le véhicule et des grandeurs (nixj) décrivant les vitesses de rotation des roues, et on détermine la (au moins une) valeur limite pour la vitesse du véhicule en fonction de cette grandeur de masse.

4. Procédé selon la revendication 1,
   **caractérisé en ce qu'**

   - on détermine une grandeur de masse, qui décrit la masse du véhicule, et on détermine la grandeur de déplacement du chargement en fonction de cette grandeur de masse, en particulier le volume du chargement avec un chargement mobile, de préférence liquide, en fonction de cette grandeur de masse, et on détermine la grandeur de déplacement du chargement en fonction de ce volume, et/ou
- on détermine et/ou on prédétermine une grandeur qui caractérise le dispositif présent sur le véhicule pour recevoir le chargement, en particulier la valeur de cette grandeur dépend, avec un chargement mobile, de préférence liquide, au moins de la forme du dispositif, et on détermine la grandeur de déplacement du chargement en fonction de cette grandeur, et/ou
- on détermine directement, avec un chargement liquide, le volume du chargement liquide pendant l'opération de chargement ou de déchargement du dispositif destiné à recevoir le chargement,
- on détermine la grandeur de déplacement du chargement en fonction de ce volume.

5. Procédé selon la revendication 1,
**caractérisé en ce qu'**
au cas où la grandeur de vitesse est supérieure à la valeur limite, on réduit la vitesse du véhicule, au moins par des interventions sur le ralentisseur et/ou par des interventions sur le moteur et/ou par des interventions de freinage sur au moins une roue, dans une mesure telle que la grandeur de vitesse résultant des interventions soit devenue inférieure à la valeur limite, et on effectue de préférence les interventions à cet effet en fonction de l'écart existant entre la grandeur de vitesse et la valeur limite.

6. Procédé selon la revendication 1,
**caractérisé en ce qu'**
on détermine deux valeurs limites (vr, vk), dont une première valeur limite (vk) correspond à une grandeur décrivant le risque de renversement du véhicule et/ou dont une deuxième valeur limite (vr) correspond à une grandeur décrivant le risque de dérapage du véhicule, en particulier en direction transversale, et en particulier pour effectuer la comparaison on choisit la valeur limite qui présente la plus petite valeur.

7. Procédé selon la revendication 6,
**caractérisé en ce qu'**
on détermine au moins une grandeur de frottement ($\mu$, delta$\mu$), qui décrit les conditions de frottement entre le pneu et la chaussée dans chaque condition de conduite, de préférence on détermine deux grandeurs de frottement, une première qui décrit le coefficient de frottement existant à l'instant, et une deuxième qui décrit la différence de coefficient de frottement sur le côté gauche ou sur le côté droit du véhicule, et on détermine au moins l'une des valeurs limites pour la vitesse du véhicule en fonction de cette (au moins) une grandeur de frottement.

8. Procédé selon la revendication 6,
**caractérisé en ce qu'**

- on détermine une première grandeur de hauteur (h), qui décrit la distance entre le centre de gravité du véhicule et la chaussée, en particulier on détermine cette première grandeur de hauteur au moins en fonction de grandeurs (nixj) décrivant les vitesses de rotation des roues, et on détermine au moins une grandeur limite pour la vitesse du véhicule en fonction de cette première grandeur de hauteur, et/ou
- on détermine une deuxième grandeur de hauteur (hc), qui décrit la distance entre un axe de véhicule orienté dans la direction longitudinale du véhicule, autour duquel le véhicule se tord et/ou est distordu et/ou est dévié en réaction à une force agissant sur le véhicule, en particulier en réaction à une force transversale, et la chaussée, en particulier on détermine cette deuxième grandeur de hauteur en moins en fonction d'une grandeur de masse (M), qui décrit la masse du véhicule, et on détermine au moins une valeur limite pour la vitesse du véhicule en fonction de cette deuxième grandeur de hauteur.

9. Procédé selon la revendication 1,
**caractérisé en ce qu'**
on détermine la valeur limite pour la vitesse du véhicule en fonction d'une grandeur de route (r) qui décrit le rayon de la route parcourue à l'instant par le véhicule, et en particulier la courbe franchie à l'instant par le véhicule, et en particulier on détermine la grandeur de route en fonction de la grandeur de vitesse (vf) et d'une grandeur d'angle de braquage (deltal), qui décrit l'angle de braquage du véhicule.

10. Dispositif pour stabiliser un véhicule, en particulier pour éviter le renversement d'un véhicule autour d'un axe de véhicule orienté dans la direction longitudinale du véhicule et/ou pour éviter le dérapage du véhicule en direction transversale, qui comprend :

- des premiers moyens (402) pour déterminer une grandeur de torsion qui caractérise la façon dont le véhicule se comporte autour d'un axe de véhicule orienté dans la direction longitudinale du véhicule, en réaction à une force agissant sur le véhicule, en particulier en réaction à une force transversale, et notamment dans quelle mesure le véhicule se tord et/ou est distordu et/ou est dévié autour de cet axe de véhicule à cause d'une force agissant sur le véhicule, et/ou

- des deuxièmes moyens (401) pour déterminer une grandeur de déplacement du chargement, en particulier pour des véhicules avec un chargement mobile, de préférence liquide, qui caractérise la façon dont le chargement du véhicule se comporte en réaction à une force agissant sur le véhicule, en particulier en réaction à une force transversale, et notamment dans quelle mesure le chargement du véhicule est déplacé et/ou dévié à cause d'une force agissant sur le véhicule,

- des troisièmes moyens (306) pour déterminer une grandeur de vitesse qui décrit la vitesse du véhicule,

- des quatrièmes moyens (404, 405) pour déterminer au moins une valeur limite pour la vitesse du véhicule, en déterminant cette valeur limite au moins en fonction de la valeur de la grandeur de torsion et/ou de la valeur de la grandeur de déplacement du chargement,

- des cinquièmes moyens (406) pour effectuer une comparaison en fonction de la grandeur de vitesse et de la valeur limite, et

- des sixièmes moyens (310, 311, 312, 313ixj, 314) pour effectuer des interventions stabilisant le véhicule en fonction de la comparaison effectuée.

FIG. 1a

FIG. 1b

FIG. 2a

FIG. 2b

FIG. 2c

FIG. 2d

FIG. 3

EP 1 030 796 B1

FIG. 4

FIG. 5

```
         ┌──────────────────────┐
         │   C, hc, h, K, µ,     │
         │   deltaµ, M, r, vf     │──── 501
         │   bereitstellen       │
         └──────────┬───────────┘
                    │
         ┌──────────▼───────────┐
         │   vr, vk ermitteln    │──── 502
         └──────────┬───────────┘
                    │
         ┌──────────▼───────────┐
         │   vmax mit            │
         │   vmax = min (vr, vk) │──── 503
         │   ermitteln           │
         └──────────┬───────────┘
                    │
              ◇─────▼─────◇
             ╱  vmax < vf ?  ╲──── N ──►
             ╲               ╱
              ◇─────┬─────◇  └──── 504
                    │ Y
         ┌──────────▼───────────┐
         │ Retardereingriff und/oder │
         │ Motoreingriff und/oder    │──── 505
         │ Bremseneingriff, so       │
         │ daß  vf reduziert wird     │
         └──────────┬───────────┘
```